# FASCICULE DE BREVET EUROPEEN

(11) **EP 4 021 677 B1**
(45) Date de publication et mention de la délivrance du brevet: **02.10.2024**
(21) Numéro de dépôt: 20761912.3
(22) Date de dépôt: 26.08.2020
(51) Int. Cl.: B23K 26/0622, B23K 26/06, B23K 26/388, B23K 26/073, B23K 26/384, G02B 27/09, G02B 27/42

(54) **DISPOSITIF D'USINAGE LASER**
LASERBEARBEITUNGSVORRICHTUNG
LASER MACHINING DEVICE

(30) Priorité: 29.08.2019 CH 10872019
(43) Date de publication de la demande: 06.07.2022
(73) Titulaire: Haute Ecole Arc, 2000 Neuchatel (CH)
(72) Inventeur: SALVADÉ, Yves, 2610 St-Imier (CH); GRIZE, Philippe, 2000 Neuchâtel (CH); SCHORDERET, Alain, 1400 Cheseaux-Noréaz (CH)
(74) Mandataire: P&TS SA (AG, Ltd.)
(86) Numéro de dépôt international: PCT/IB2020/057953
(87) Numéro de publication internationale: WO 2021/038453

(56) Documents cités:
- EP-A1- 3 184 232
- DE-A1- 19 736 110
- US-A1- 2013 175 243
- US-B2- 6 946 620

## Description

### Domaine technique

La présente invention concerne un dispositif d'usinage laser tel que décrit dans le préambule de la revendication 1 (voir, par exemple, US6946620 B2). Elle couvre en particulier un dispositif d'usinage à laser pulsé picoseconde ou femtoseconde comprenant une tête de trépanation optique.

### Etat de la technique

L'usinage de trous profonds grâce à l'avènement des lasers picosecondes ou femtosecondes est connu ; cette technologie permet des temps de cycles plus courts qu'avec les technologies d'électroérosion.

Des spots laser, dont le diamètre correspond au diamètre des trous à usiner sont couramment utilisés. Cette approche ne permet cependant pas de maîtriser les angles de dépouille.

Le mode de perçage connu sous la dénomination de trépanation optique implique un mouvement circulaire du faisceau laser sur la circonférence du trou à usiner. La divergence du faisceau laser sur la surface de la pièce à usiner provoque dans ce cas un angle de dépouille qu'il convient de compenser en modifiant l'incidence du faisceau laser.

Des têtes de trépanation actuellement utilisées comportent des trains de miroirs galvanométriques qui permettent d'orienter le faisceau laser sur la pièce à usiner. D'autres systèmes utilisent des optiques de focalisation rotatives basées sur des prismes, tel que des prismes de Dove, des prismes wedge, ou des prismes de Abbe-Koenig par exemple.

Les composants optiques réfractifs, tels que les prismes sont cependant volumineux et limitent la compacité des têtes de trépanation optiques. Leur encombrement est en outre un frein aux mouvements de ces têtes de trépanation optique.

Il y a donc matière à améliorer le procédé de trépanation, notamment en termes de flexibilité et de rapidité.

### Bref résumé de l'invention

La présente invention propose un dispositif de trépanation optique compact et facilement orientable selon plusieurs axes, de manière à maîtriser les angles de dépouille de la pièce usinée. Notamment des angles de dépouille positifs ou négatifs peuvent être obtenus avec une grande précision, quelle que soit la forme à usiner.

Un objectif de la présente invention est de fournir une solution de micro-usinage particulièrement adaptée aux profils comportant un rapport hauteur/diamètre important. La présente invention est en particulier adaptée à l'usinage de pièces où le rapport hauteur/diamètre est supérieur à 2, voire supérieur à 3 ou 5. Des pièces mécaniques de haute précision telles que des injecteurs ou des buses de filage peuvent alors être usinées. Des trous d'un diamètre compris entre 50 micromètres et 1 millimètre peuvent être usinés au moyen de la présente invention.

Un autre objectif de la présente invention est de fournir une solution adaptable à une grande variété de matériaux, notamment en relation avec leurs propriétés de diffusion thermique.

En particulier, le dispositif de micro-usinage selon la présente invention comprend une tête de trépanation optique comme décrit dans la revendication 1.

Le dispositif rotatif du système opto-mécanique comporte un réseau de diffraction rotatif, pouvant être de géométrie circulaire. L'épaisseur du réseau de diffraction rotatif est inférieure ou égale à 1 millimètre. Les diffractions d'ordre 1 et -1 sont principalement exploitées à travers le réseau de diffraction rotatif.

Le dispositif rotatif selon l'invention peut être une broche disponible dans le commerce, dont la vitesse de rotation est supérieure à 180 000 tours par minute, voire 200 000 tours par minute.

Le système opto-mécanique du dispositif selon la présente invention, comprend avantageusement une première lentille, disposée entre la source laser et le dispositif rotatif, dont la focale peut être variable. Le système opto-mécanique du dispositif selon la présente invention comprend - une seconde lentille, disposée en aval du dispositif rotatif et mobile en translation suivant l'axe longitudinal du système opto-mécanique. La seconde lentille peut être conique. Le système opto-mécanique peut en outre comprendre une dernière lentille dont la focale est fixe. La dernière lentille du système opto-mécanique a un rôle de lentille de focalisation. Entre la seconde lentille et la dernière lentille, une ou plusieurs autres lentilles peuvent être disposées et éventuellement former un train de lentilles.

La présente invention se rapporte également à un procédé d'usinage par trépanation optique.

### Brève description des figures

Des exemples de mise en oeuvre de l'invention sont indiqués dans la description illustrée par les figures annexées:
- Figure 1 : vue schématique de la tête de trépanation selon un mode de réalisation de la présente invention

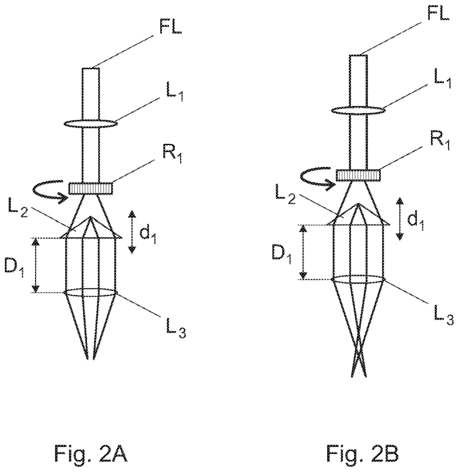

- Figures 2a, 2b : vue schématique de la trajectoire du faisceau laser selon deux modes distincts.
- Figure 3 : vue schématique d'un réseau de diffraction rotatif utilisé dans la présente invention.
- Figures 4A, 4B, 4C, 4D : exemples d'angles de dépouille en fonction de l'angle d'incidence du faisceau laser sur la pièce à usiner.

### Exemple(s) de mode de réalisation de l'invention

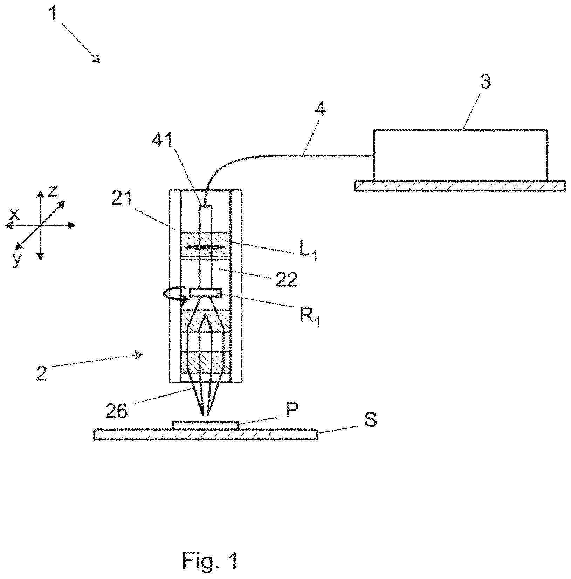

La présente invention concerne par exemple une tête de trépanation **1** comprenant un système opto-mécanique **2** et une source laser **3** comme illustré à la figure 1. Le système opto-mécanique **2** est connecté à la source laser **3** par une ou plusieurs fibres optiques **4.** La fibre optique 4 conduit le faisceau laser FL depuis la source laser **3** vers le système opto-mécanique **2,** auquel elle est connectée au moyen d'une connexion optique **41.** La ou les fibres optiques **4** sont de préférence creuses et adaptée à la puissance lumineuse de la source laser **3.** La source laser **3** est de préférence fixe. Elle est de type picolaser ou femtolaser.

La tête de trépanation optique **1** est mobile selon l'un des axes x, y, ou z, de préférence selon les deux axes horizontaux x et y. Le dispositif comprend également un support de posage **S** destiné à maintenir la pièce **P** à percer ou usiner. Le support **S** peut être disposé horizontalement de manière fixe. La tête de trépanation optique **1,** mobile selon les axes x et y peut alors se déplacer à la surface de la pièce **P** et y effectuer les perçages aux endroits prédéterminés. Chaque opération de perçage peut en outre demander un mouvement de la tête de trépanation **1** selon les deux axes x et y, permettant un mouvement circulaire de la tête de trépanation **1.**

Selon un mode de réalisation alternatif, la tête de trépanation optique **1** peut être fixe et le support **S** peut être monté mobile selon les deux axes x et y de manière à permettre un mouvement de rotation.

La tête de trépanation optique **1** ou le support **S,** ou les deux, peuvent être montés en outre de manière à être mobiles selon l'axe z. Des pièces d'épaisseur et de forme variées peuvent alors être usinées.

Selon un mode de réalisation, le support **S** ou la tête de trépanation optique **1,** ou les deux, peuvent être en outre montés mobiles en rotation autour d'au moins un axe horizontal, tel que x, ou y, ou les deux. De cette manière l'usinage peut être réalisé selon des angles d'incidence différents de l'angle droit par rapport à la surface de la pièce **P.**

La source laser **3** est une source de laser pulsé picoseconde ou femtoseconde. De telles sources délivrent un faisceau laser selon des impulsions de durée inférieure à une dizaine de picosecondes, de préférence inférieure à 100 femtosecondes, voire inférieure à 10 femtosecondes. Différentes sources laser picosecondes et femtosecondes sont disponibles dans le commerce et connues de l'homme de métier. Des puissances optiques supérieures à 30 W, de préférence égales ou supérieures à 50 W sont avantageusement utilisées. L'énergie de chaque impulsion est supérieure à 100 microjoules, de préférence supérieure à 500 microjoules.

L'avantage d'une telle source lumineuse pulsée est de circonscrire l'énergie utile à l'usinage au point d'impact du faisceau laser **FL,** en évitant le transfert thermique aux zones voisines. La matière avoisinant l'impact du faisceau laser **FL** n'est donc pas détériorée, ce qui autorise une grande qualité de perçage et d'usinage, ainsi qu'une grande variété de matières pouvant être usinées.

Le système opto-mécanique **2** comporte un corps de tête **21,** dans lequel sont assemblés les différents éléments opto-mécaniques. En l'occurrence, le corps de tête **21** comporte un espace central permettant le passage d'un faisceau laser **FL** et son guidage à travers les éléments opto-mécaniques contenus dans le système opto-mécanique **2,** depuis la ou les fibres optiques **4** jusqu'à son impact sur la pièce **P** à usiner. Plusieurs éléments opto-mécaniques sont disposés sur la trajectoire du faisceau laser **FL** entre la connexion de la fibre optique **41** et l'extrémité **26,** à l'opposé de la connexion de la fibre optique, du corps de tête **21.** Le système opto-mécanique **2** comporte ainsi un axe longitudinal correspondant globalement à la trajectoire du faisceau laser **FL.**

Selon un mode de réalisation, le corps de tête **21** comprend une première lentille **L1,** une broche **22** contenant un réseau de diffraction rotatif **R1,** une seconde lentille **L2** et une dernière lentille **L3.** La dernière lentille L3 est disposée à l'extrémité **26** du corps de tête **21** Le faisceau laser **FL** issu de la fibre optique **4** passe à travers la première lentille **L1,** puis la broche **22,** puis à travers les secondes **L2** et dernière lentilles **L3.** La disposition des première **L1,** seconde **L2,** et dernière **L3** lentilles est telle que la seconde lentille **L2** est en aval de la première lentille **L1** et en amont de la dernière lentille **L3.**

Les termes « amont » et « aval » se définissent dans l'ensemble du texte par rapport au sens de propagation du faisceau laser **FL.** Tout élément situé en amont d'un autre élément sera impacté par le faisceau laser **FL** avant lui. Tout élément situé en aval d'un autre élément sera impacté par le faisceau laser **FL** après lui.

Les première **L1,** seconde **L2** et dernière **L3** lentilles ont pour objectif de faire converger le faisceau laser **FL** en des points concentrés de manière à en focaliser l'énergie. La focale de chacune des première **L1,** seconde **L2** et dernière **L3** lentille, peut être prédéterminée ou variable.

La position de chacune des première **L1,** seconde **L2** et dernière **L3** lentilles les unes par rapport aux autres peut être prédéterminée ou variable. Chacune des lentilles peut être disposée à l'intérieur du corps de tête **21** sur des supports de lentille qui peuvent être fixes ou mobiles. Un support de lentille peut être mobile en translation le long de la trajectoire du faisceau laser **FL** ou bien en rotation selon l'un ou plusieurs des axes x ou y, de manière à faire varier la direction de la trajectoire du faisceau laser **FL.** Les supports de lentilles mobiles peuvent être motorisés et pilotés en fonction des objectifs visés. Ils permettent des réglages précis du faisceau laser **FL** et de son impact sur la pièce à usiner **P.** Une ou plusieurs lentilles intermédiaires (non représentées) peuvent être prévues entre les seconde **L2** et dernière **L3** lentilles. Elles peuvent être indépendamment les unes des autres fixes ou mobiles en translation le long de la trajectoire du faisceau laser **FL,** ou bien en rotation selon d'un ou plusieurs des axes x ou y.

Selon un mode de réalisation la première lentille **L1** est une lentille à focale variable. La position du plan de focalisation **PL1** correspondant à la focale de la première lentille **L1** peut donc être modifiée, soit avant l'opération d'usinage, soit pendant l'opération d'usinage. Une lentille permettant une variation facile et rapide de sa focale est donc avantageusement utilisée. Par exemple une lentille liquide telle que celles développées par la société Varioptic et décrites dans les brevets EP 1870742, EP1662276, WO2007113637 peut être utilisée à cette fin. La rapidité de focalisation de la lentille permet un réglage presque instantané du plan de focalisation.

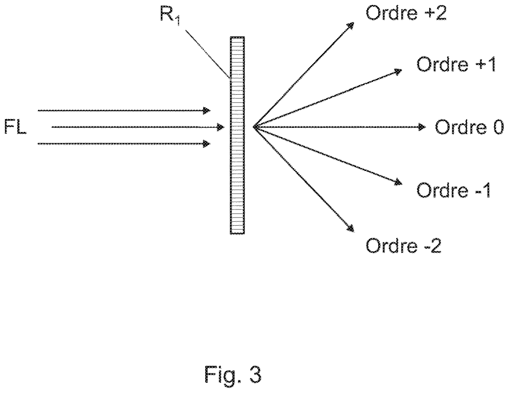

Le faisceau laser **FL** passe ensuite dans le réseau de diffraction rotatif **R1** contenu dans la broche **22.** Le réseau de diffraction rotatif **R1** est le seul élément opto-mécanique rotatif du système opto-mécanique **2.** Le réseau de diffraction rotatif **R1** est illustré à la figure 3. Il permet de dévier la lumière du faisceau laser **FL** dans des directions prédéfinies, connues sous le terme d'ordres de diffraction. Des réseaux de diffraction rotatifs **R1** disponibles sur le marché peuvent être utilisés. Les réseaux de diffraction rotatifs **R1** de type réseaux de phase, connus pour leur excellente efficacité de diffraction, peuvent par exemple être utilisés.

Le réseau de diffraction est de préférence un réseau de phase, dont le relief est soit continu (par exemple sinusoïdal), soit composé d'un nombre limité de niveaux de hauteur (binaire ou multi-niveaux). De préférence, les ordres de diffraction +1 et -1 seront exploités, et la géométrie du réseau de phase doit permettre d'obtenir un maximum d'efficacité de diffraction dans ces deux ordres. Alternativement, d'autres géométries de réseaux permettant d'exploiter les ordres de diffraction supérieurs peuvent être utilisées.

Le réseau de diffraction rotatif **R1** est un composant très compact. Il peut être par exemple composé d'un réseau de lignes, de taille micrométrique sur une plaque de verre d'épaisseur inférieure à 1 mm. Le réseau de diffraction rotatif **R1** est de symétrie circulaire et léger. Il peut donc être avantageusement associé à une broche **22** ultra-haute-vitesse. Une telle broche peut tourner à une vitesse de l'ordre de 180 000 tours par minutes, 200 000 tours par minutes, 300'000 tours par minutes ou plus. Les caractéristiques du réseau de diffraction rotatif **R1** permettent un équilibrage optimal de la broche **22** lors de sa rotation. L'encombrement réduit du réseau de diffraction rotatif **R1** permet de réduire la taille de la broche **22** et d'en atténuer les défauts éventuels.

L'utilisation d'un tel réseau de diffraction rotatif **R1** permet en effet de rester peu sensible voire insensible aux éventuels mouvements de translation. Les éventuels défauts de la broche **22,** notamment ceux impactant la circularité du mouvement seront donc atténués ou invisibles.

Le réseau de diffraction rotatif **R1** étant très mince, l'impact d'un éventuel décalage angulaire sera significativement atténué par rapport à d'autres arrangements intégrant des prismes ou des miroirs. En particulier, un décalage angulaire du réseau de diffraction rotatif **R1** jusqu'à 30 mrad peut être toléré dans le dispositif selon la présente invention.

La broche **22** est conçue pour tourner à une vitesse supérieure à 180 000 tours par minute, de préférence supérieure à 300 000 tours par minute et plus avantageusement supérieure à 500 000 tours par minute. Elle peut être par exemple une broche de micro-perçage industriel telle que la broche MUHD tournant à 500 000 tours par minute avec une cadence de perçage de 21 Hz. Elle peut alternativement être une micro-turbine à gaz. Un exemple de broches **22** reposant sur une combinaison de paliers hybrides aérodynamiques/aérostatiques, décrit dans la demande de brevet CH 710 120, peut être utilisé à cette fin. D'autres broches destinées par exemple au micro-usinage peuvent être utilisées dans le cadre de la présente invention.

Selon un mode de réalisation, la seconde lentille **L2** est de type conique, permettant de façonner le faisceau laser **FL** en forme d'anneaux ou de cylindre creux. La seconde lentille **L2** peut notamment être du type « axicon ». La seconde lentille **L2** est de préférence montée sur un support de lentille mobile (non représenté) en translation le long du corps de tête **1.** En d'autres termes, la seconde lentille **L2** est mobile selon l'axe longitudinal du système opto-mécanique **2.** Le faisceau laser **FL** issu du réseau de diffraction rotatif **R1,** traverse la seconde lentille **L2,** conçue pour produire un faisceau laser en forme d'anneau ou de cylindre creux.. Le déplacement vertical de la seconde lentille **L2** sur une distance **d1** permet de moduler la distance **D** qui la sépare de la dernière lentille **L3.**

Selon un mode de réalisation la seconde lentille **L2** peut être de forme conique. La pointe du cône d'une telle lentille, selon ses propriétés et les besoins du dispositif, peut être orientée vers la source laser ou bien vers la dernière lentille **L3.**

Selon un mode de réalisation la seconde lentille **L2** peut comprendre un ensemble de plusieurs lentilles.

La dernière lentille **L3** est de préférence montée sur un support fixe entre la seconde lentille **L2** et l'extrémité **26** du corps de tête **21.** La focale de la dernière lentille **L3** est de préférence prédéterminée. La dernière lentille **L3** est de préférence convergente.

Selon l'arrangement de la tête de trépanation optique **1,** la focale de la première lentille **L1** et la position de la seconde lentille **L2** peuvent faire l'objet de variations, soit en termes de préréglages avant l'opération de micro-usinage, soit en cours d'usinage.

Selon un mode de réalisation, la focale et la position de la première lentille **L1** et la position de la seconde lentille **L2,** peuvent être modulées, soit en termes de préréglages avant l'opération d'usinage, soit en cours d'usinage.

L'impact du faisceau laser **FL** sur la pièce **P** à usiner peut prendre la forme d'un point unique d'un diamètre de l'ordre de 20 micromètres. En fonction des paramètres de réglages utilisés, notamment ceux relatifs à la focale de la première lentille **L1** et à la position de la seconde lentille **L2,** l'impact du faisceau laser **FL,** lorsque la broche **22** ne tourne pas, peut prendre la forme de deux points d'un diamètre de l'ordre de 20 micromètres. L'espacement des deux points lumineux sur la surface de la pièce **P** à usiner dépend notamment de la position de la seconde lentille **L2.**

La tête de trépanation optique **1** selon la présente invention présente l'avantage d'être compacte. En particulier, le système opto-mécanique **2** de la tête de trépanation optique **1** a un encombrement inférieur à un cylindre de 50 mm de diamètre et de 200 mm de de longueur. La tête de trépanation peut alors facilement être montée sur des axes de translation et de rotation.

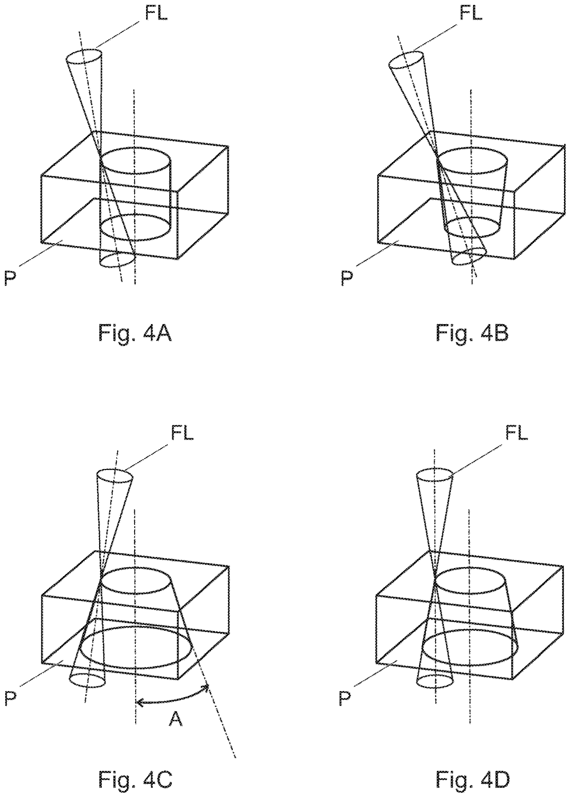

Les angles de dépouille **A** peuvent être positifs, tels qu'illustré aux figures 4A et 4B, ou bien négatifs, tels qu'illustré aux figures 4C et 4D. Un angle de dépouille A négatif de 0° à 5° peut être réalisé.

La présente invention a également pour objet un procédé d'usinage par trépanation optique permettant de maîtriser les angles de dépouilles **A** d'une pièce **P** en usinage. L'angle de dépouille **A** peut être droit, comme représenté à la figure 4A par exemple. Dans cette configuration, les bords du trou de la pièce usinée **P** sont perpendiculaires à sa surface extérieure. En d'autres termes, le trou est cylindrique. L'angle de dépouille **A** peut être positif, comme représenté à la figure 4B. Dans ce cas, le trou forme dans la pièce usinée **P** une section conique où le diamètre de la surface supérieure est supérieur au diamètre sur la surface inférieure de la pièce **P.** La surface supérieure de la pièce **P** s'entend comme la surface sur laquelle le faisceau laser **FL** est incident. La surface inférieure de la pièce **P** est la surface opposée, qui repose sur le support **S.** Alternativement, l'angle de dépouille **A** peut être négatif, comme représenté aux figures 4C et 4D. Dans ce cas, le trou forme dans la pièce usinée **P** une section conique où le diamètre de la surface supérieure est inférieur au diamètre sur la surface inférieure de la pièce **P.** L'angle de dépouille **A** n'est pas directement représentatif de l'angle d'incidence du faisceau laser **FL** sur la surface supérieure de la pièce **P.** Une incidence du faisceau laser orthogonale à la surface supérieure de la pièce **P** ne produit pas un angle de dépouille **A** droit, mais un angle de dépouille **A** négatif, comme indiqué à la figure 4D. L'angle de dépouille **A** droit est obtenu au moyen d'une incidence inclinée du faisceau laser **FL** sur la surface supérieure de la pièce **P** à usiner, comme illustré à la figure 4A. Dans ce cas, l'incidence du faisceau laser **FL** sur la surface supérieure de la pièce **P** doit être positif, c'est-à-dire orientée vers l'intérieur du trou en usinage. Lorsque l'angle d'incidence positif du faisceau laser **FL** sur la surface supérieure de la pièce **P** augmente, alors l'angle de dépouille **A** devient positif, comme illustré à la figure 4B. Lorsque l'angle d'incidence du faisceau laser **FL** sur la surface supérieure de la pièce **P** est négatif, comme illustré à la figure 4C, l'angle de dépouille **A** devient négatif.

Le procédé comprend une étape de focaliser un faisceau laser **FL** pulsé picoseconde ou femtoseconde sur la pièce **P** à usiner. Le faisceau laser **FL** est notamment focalisé sur la pièce **P** au moyen de la tête de trépanation optique **1** décrite ci-dessus.

Le procédé comprend une étape d'initier un mouvement de précession du faisceau laser **FL** au moyen d'un réseau de diffraction rotatif **R1.** La vitesse de rotation du réseau de diffraction rotatif **R1** est de 180 000 tours par minute ou plus. La vitesse de rotation du réseau de diffraction rotatif **R1** peut être adaptée à la fréquence de pulsation du faisceau laser **FL** et aux besoins de l'usinage, notamment au diamètre du trou à usiner dans la pièce **P.** Une vitesse de rotation accrue permet un usinage plus rapide. Le réseau de diffraction rotatif **R1** peut notamment être intégré à une broche **22** telle que décrite ci-dessus. Le mouvement de précession du faisceau laser **FL** permet au faisceau laser FL de former un cercle de diamètre donné sur la surface supérieure de la pièce à usiner **P.**

Le procédé selon la présente invention comporte une étape de moduler la distance de la seconde lentille **L2** mobile en translation, par rapport réseau de diffraction rotatif **R1.** La seconde lentille **L2** peut être mobile sur une distance **d1.** La distance **D** séparant la seconde lentille **L2** et la dernière lentille **L3** peut alors varier d'une distance minimale **Dm** à une distance maximale **DM.** Les distances minimale **Dm** et maximale **DM,** ainsi que la distance **d1,** sont adaptables en fonction des propriétés de la seconde lentille **L2,** notamment en fonction de l'angle de diffraction et de l'angle de déviation qui caractérisent la seconde lentille **L2.**

La distance séparant la seconde lentille **L2** du réseau de diffraction rotatif **R1** permet de moduler la distance séparant les deux faisceaux laser à la sortie de la seconde lentille **L2,** générés par exemple par les ordres de diffraction +1/-1 du réseau de diffraction rotatif **R1.** En aval de la lentille **L3,** l'angle d'incidence des faisceaux laser résultant de ces ordres de diffractions + 1/-1, sur la pièce à usiner **P,** est alors adaptable. Les faisceaux laser **FL** résultant des ordres de diffraction +1/-1 peuvent se focaliser à la surface de la pièce à usiner **P** en un point de diamètres compris entre 10 microns et 20 microns. L'incidence orthogonale à la surface de la pièce à usiner produit un angle de dépouille **A** négatif. Alternativement, les faisceaux laser **FL** résultant des ordres de diffraction +1/-1 ont une incidence positive sur la surface supérieure de la pièce à usiner **P,** formant ainsi un angle de dépouille **A** droit ou positif. Alternativement, les faisceaux laser **FL** résultant des ordres de diffraction +1/-1 ont une incidence négative sur la surface supérieure de la pièce à usiner **P,** formant ainsi un angle de dépouille **A** négatif.

La focalisation des faisceaux laser résultant de la diffraction peut s'appliquer à d'autres ordres de diffraction que les ordres de diffraction +1 et -1. En particulier, des faisceaux laser résultant de la diffraction d'ordres supérieurs peuvent faire l'objet d'une focalisation sur la surface de la pièce à usiner.

### Numéros de référence employés sur les figures

- A: Angle de dépouille
- d1: Distance de mouvement de la seconde lentille L2
- D1: Distance entre la seconde et la troisième lentille
- FL: Faisceau laser
- L1: Première lentille
- L2: Seconde lentille
- L3: Troisième lentille
- P: Pièce à usiner
- R1: Réseau de diffraction rotatif
- S: Support de pièce
- x,y,z: Axes d'orientation
- 1: Tête de trépanation optique
- 2: Système opto-mécanique
- 21: Corps de tête
- 22: Broche
- 26: Extrémité du corps de tête
- 3: Source laser
- 4: Fibre optique
- 41: Connexion optique

## Revendications

1. Dispositif d'usinage comprenant une tête de trépanation optique (1), qui comprend :
- un système opto-mécanique (2), comprenant un corps de tête (21) pourvu d'une extrémité (26) et d'un dispositif rotatif (22) comportant un réseau de diffraction rotatif (R1),
- une source de laser pulsé picoseconde ou femtoseconde (3),
- au moins une fibre optique (4),
- une première lentille (L1), et
- une seconde lentille (L2)
**caractérisé en ce que** la seconde lentille (L2) est disposée en aval du dispositif rotatif (22) et est mobile en translation suivant l'axe longitudinal du système opto-mécanique (2).

2. Dispositif selon la revendication (1), **caractérisé en ce que** le réseau de diffraction rotatif (R1) est de géométrie circulaire.

3. Dispositif selon les revendications 1 ou 2, **caractérisé en ce que** le réseau de diffraction rotatif (R1) a une épaisseur inférieure à 1 millimètre.

4. Dispositif selon l'une ou l'autre des revendications précédentes, **caractérisé en ce que** le réseau de diffraction rotatif (R1) est de type réseaux de phase.

5. Dispositif selon l'une ou l'autre des revendications précédentes, **caractérisé en ce que** le dispositif rotatif (22) est une broche dont la vitesse de rotation est supérieure à 180 000 tours par minute.

6. Dispositif selon l'une ou l'autre des revendications précédentes, **caractérisé en ce que** la première lentille (L1) est disposée entre la source laser (3) et le dispositif rotatif (22) et **en ce que** sa focale est variable.

7. Dispositif selon la revendication 1, **caractérisé en ce que** ladite seconde lentille (L2) est conique.

8. Dispositif selon l'une ou l'autre des revendications précédentes, **caractérisé en ce que** le système opto-mécanique comprend une dernière lentille (L3), disposée à l'extrémité (26) du corps de tête (21) dont la focale est fixe.

9. Procédé de trépanation optique utilisant le dispositif d'usinage selon l'une ou l'autre des revendications précédentes et comprenant :
- une étape de focaliser un faisceau laser (FL) pulsé picoseconde ou femtoseconde sur la surface supérieure d'une pièce (P) à usiner,
- une étape de contrôle de l'angle d'incidence du faisceau laser pulsé picoseconde ou femtoseconde sur ladite surface supérieure de la pièce (P) à usiner,
- une étape de modulation de la distance de la seconde lentille (L2) mobile en translation, par rapport au réseau de diffraction rotatif R1,
- une étape d'initier un mouvement de précession du faisceau laser **FL** sur ladite surface supérieure de la pièce (P) à usiner, permettant au faisceau laser (FL) de décrire une trajectoire circulaire.

## Patentansprüche

1. Bearbeitungsvorrichtung mit einem optischen Trepanationskopf (1), umfassend:
- ein optomechanisches System (2), mit einem Kopfkörper (21) versehen mit einem Ende (26) und einer Drehvorrichtung (22), welche ein drehendes Beugungsgitter (R1) umfasst,
- eine Pikosekunden- oder Femtosekunden-gepulste Laserquelle (3),
- mindestens eine optische Faser (4),
- eine erste Linse (L1) und
- eine zweite Linse (L2),
**dadurch gekennzeichnet, dass** die zweite Linse (L2) der Drehvorrichtung (22) nachgeordnet und entlang der Längsachse des optomechanischen Systems (2) translatorisch beweglich ist.

2. Vorrichtung gemäss Anspruch 1, **dadurch gekennzeichnet, dass** das drehende Beugungsgitter (R1) eine kreisförmige Geometrie aufweist.

3. Vorrichtung gemäss Anspruch 1 oder 2, **dadurch gekennzeichnet, dass** das drehende Beugungsgitter (R1) eine Dicke von weniger als 1 Millimeter aufweist.

4. Vorrichtung gemäss irgendeinem der vorhergehenden Ansprüche, **dadurch gekennzeichnet, dass** das drehende Beugungsgitter (R1) vom Phasengittertyp ist.

5. Vorrichtung gemäss irgendeinem der vorhergehenden Ansprüche, **dadurch gekennzeichnet, dass** die Drehvorrichtung (22) eine Spindel ist, deren Drehzahl grösser als 180.000 Umdrehungen pro Minute ist.

6. Vorrichtung gemäss irgendeinem der vorhergehenden Ansprüche, **dadurch gekennzeichnet, dass** die erste Linse (L1) zwischen der Laserquelle (3) und der Drehvorrichtung (22) angeordnet ist, und dass ihre Brennweite variabel ist.

7. Vorrichtung gemäss Anspruch 1, **dadurch gekennzeichnet, dass** die besagte zweite Linse (L2) konisch ist.

8. Vorrichtung gemäss irgendeinem der vorhergehenden Ansprüche, **dadurch gekennzeichnet, dass** das optomechanische System eine letzte Linse (L3) umfasst, welche am Ende (26) des Kopfkörpers (21) angeordnet ist, und deren Brennweite fest ist.

9. Optisches Trepanationsverfahren, welches die Bearbeitungsvorrichtung gemäss irgendeinem der vorhergehenden Ansprüche verwendet und welches umfasst:
- einen Schritt zum Fokussieren eines gepulsten Pikosekunden- oder Femtosekunden-Laserstrahls (FL) auf die obere Oberfläche eines zu bearbeitenden Teils (P),
- einen Schritt zum Steuern des Einfallswinkels des gepulsten Pikosekunden- oder Femtosekunden-Laserstrahls auf die besagte obere Oberfläche des zu bearbeitenden Teils (P),
- einen Schritt zum Modulieren des Abstands der zweiten, in Translation beweglichen Linse (L2) in Bezug auf das drehende Beugungsgitter (R1),
- einen Schritt zum Einleiten einer Präzessionsbewegung des Laserstrahls (FL) auf die besagte obere Oberfläche des zu

## Claims

1. Machining device comprising an optical trepanation head (1), which comprises:
- an opto-mechanical system (2), having a head body (21) provided with an extremity (26) and with a rotating device (22) comprising a rotating diffraction grating (R1),
- a picosecond or femtosecond pulsed laser source (3),
- at least one optical fibre (4),
- a first lens (L1), and
- - a second lens (L2)
**characterized in that** the second lens (L2) is arranged downstream of the rotating device (22) and is movable in translation along the longitudinal axis of the opto-mechanical system (2).

2. Device according to claim 1, **characterized in that** the rotating diffraction grating (R1) has a circular geometry.

3. Device according to claims 1 or 2, **characterized in that** the rotating diffraction grating (R1) has a thickness of less than 1 millimetre.

4. Device according to any one of the preceding claims, **characterized in that** the rotating diffraction grating (R1) is of the phase grating type.

5. Device according to any one of the preceding claims, **characterized in that** the rotating device (22) is a spindle whose rotation speed is greater than 180,000 revolutions per minute.

6. Device according to any one of the preceding claims, **characterized in that** the first lens (L1) is arranged between the laser source (3) and the rotating device (22) and **in that** its focal length is variable.

7. Device according to claim 1, **characterized in that** said second lens (L2) is conical.

8. Device according to any one of the preceding claims, **characterized in that** the opto-mechanical system comprises a last lens (L3), arranged at the extremity (26) of the head body (21) whose focal length is fixed.

9. Optical trepanation process using the machining device according to any one of the preceding claims and comprising:
- a step of focusing a picosecond or femtosecond pulsed laser beam (FL) on the upper surface of a part (P) to be machined,
- a step of controlling the angle of incidence of the pulsed picosecond or femtosecond laser beam on said upper surface of the part (P) to be machined,
- a step of modulating the distance of the second lens (L2), which is mobile in translation, relative to the rotating diffraction grating (R1),
- a step of initiating a precession movement of the laser beam (FL) on said upper surface of the part (P) to be machined, allowing the laser beam (FL) to perform a circular trajectory.
